# EUROPÄISCHE PATENTSCHRIFT

(11) **EP 1 455 111 B1**
(45) Veröffentlichungstag und Bekanntmachung des Hinweises auf die Patenterteilung: **07.12.2005**
(21) Anmeldenummer: 04002496.0
(22) Anmeldetag: 05.02.2004
(51) Int. Cl.: F16F 9/46

(54) **Hydraulischer Schwingungsdämpfer für Kraftfahrzeuge**
Hydraulic shock absorber for a motor vehicle
Amortisseur hydraulique pour véhicule automobile

(30) Priorität: 06.03.2003 DE 10309743
(43) Veröffentlichungstag der Anmeldung: 08.09.2004
(73) Patentinhaber: ThyssenKrupp Bilstein GmbH, 58256 Ennepetal (DE)
(72) Erfinder: Adamek, Jürgen, Dr., 34431 Marsberg (DE); Feist, Dirk, 44627 Herne (DE)
(74) Vertreter: Adams, Steffen

(56) Entgegenhaltungen:
- DE-C- 4 020 045
- DE-C- 10 040 518
- PATENT ABSTRACTS OF JAPAN Bd. 2002, Nr. 04, 4. August 2002 (2002-08-04) & JP 2001 349366 A (TOKICO LTD), 21. Dezember 2001 (2001-12-21)

## Beschreibung

Die Erfindung betrifft einen regelbaren Schwingungsdämpfer für Kraftfahrzeuge nach dem Oberbegriff des Anspruchs 1.

Um das Fahrverhalten eines Kraftfahrzeuges den gegebenen Fahr- und Straßenverhältnissen anpassen zu können, werden Schwingungsdämpfer regelbar ausgeführt. Dabei werden den Dämpfungsventilen im Dämpferkolben zusätzliche regelbare Bypassventile zugeordnet. Die Regelung erfolgt üblicherweise durch elektronische Regelprogramme, die nach den unterschiedlichsten Messwerten, wie Fahrzeuggeschwindigkeit, Lenkradstellung und fahrdynamische Kennwerte, die Regelung der Schwingungsdämpfung vornehmen. Für eine besonders feinfühlige Regelung kann es erforderlich sein, dass der Bypass über wenigstens zwei Bypasskanäle verfügt, die voneinander abhängig gesteuert werden.

Derartige Bypasssysteme sind aus der DE 40 20 045 C1 oder der DE 198 36 286 A1 bekannt. Nachteilig bei derartigen, mit wenigstens zwei Bypasskanälen versehenen Bypässen ergibt sich, dass die Kanäle nur nacheinander geöffnet bzw. geschlossen werden können. Dabei kann dieses stufenweise, wie bei der DE 40 20 045 C1 oder kontinuierlich, wie bei der DE 198 36 286 A1, erfolgen.

Aus der JP 2001 349366 A ist ein hydraulischer Schwingungsdämpfer mit allen Merkmalen des Oberbegriffs des Patentanspruchs 1 bekannt. Bei diesem hydraulischen Schwingungsdämpfer ist der Schieber, der zur Steuerung der Durchflussquerschnitte der Bypasskanäle verwendet wird, als Drehschieber ausgebildet. Nachteilig hieran ist, dass die Haltekräfte für den Schieber vergleichsweise hoch sind, sodass eine entsprechend starke Betätigungsvorrichtung für den Schieber vorgesehen sein muss.

Der Erfindung liegt die Aufgabe zugrunde, einen gattungsgemäßen hydraulischen Schwingungsdämpfer so weiterzuentwickeln, dass die wenigstens zwei Bypasskanäle zwar abhängig voneinander, aber nicht unbedingt nacheinander geöffnet und/oder geschlossen werden können, wobei die Haltekräfte für das Bypassventil möglichst gering sein sollen und die Dämpfungskennung des Schwingungsdämpfers in weiten Bereichen variierbar sein soll.

Diese Aufgabe wird durch die Merkmale des Anspruchs 1 gelöst. Vorteilhafte Aus- und Weiterbildungen sind in den Ansprüchen 2 bis 6 beschrieben.

Die mit der Erfindung erzielten Vorteile bestehen insbesondere darin, dass durch die Variation der Bypassquerschnitte und durch die Variation der Steuerquerschnitte nahezu beliebige Bypasskennungen erzielt werden können, obwohl die verschiedenen Bypasskanäle nur über ein Stellelement, und damit auch nur über ein dem Stellelement zugeordnetes Antriebselement, betrieben werden.

Dass als Stellelement für einen Bypasskanal ein mit einem Steuerdurchbruch versehener Flachschieber eingesetzt wird, ist aus der DE 100 40 518 bekannt. Aus dieser Schrift kann der Fachmann jedoch keinen Hinweis dahingehend erhalten, dass dieses Stellelement auch zum Verstellen von mehr als einem Bypasskanal einsetzbar ist.

Ein Ausführungsbeispiel der Erfindung ist in der Zeichnung dargestellt und wird im Folgenden näher beschrieben. Es zeigen
- Fig. 1: einen Ausschnitt aus einem Schwingungsdämpfer im Bereich des Dämpfungskolbens und
- Fig. 2: die Seitenansicht speziell auf den Flachschieber.

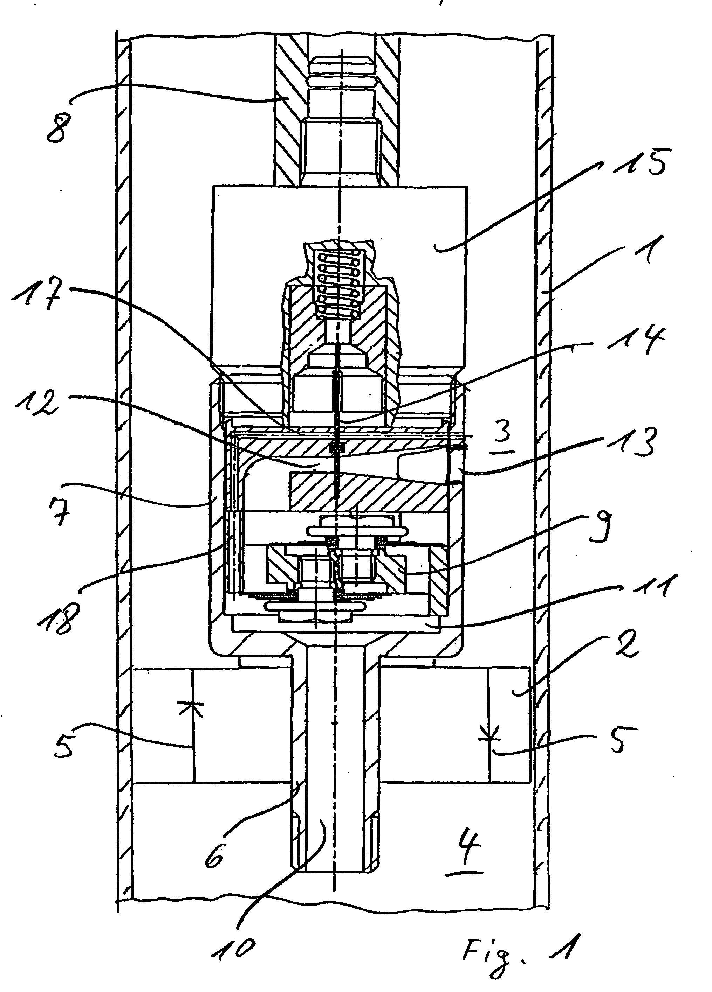

Wie in Fig. 1 dargestellt, weist der Stoßdämpfer einen Zylinder 1 auf, dessen Innenraum durch einen Dämpfungskolben 2 in zwei Arbeitsräume 3, 4 unterteilt wird. Der Dämpfungskolben 2 ist in bekannter Weise mit nur schematisch dargestellten Dämpfungsventilen 5 versehen und ist über nicht näher dargestellte Befestigungselemente auf einem Zapfen 6 eines Bypassgehäuses 7, welches wiederum mit der Kolbenstange 8 verbunden ist, befestigt.

Das Bypassgehäuse 7 trägt einen Bypasskolben 9, der hydraulisch in einem ersten Bypasskanal liegt. Dieser erste Bypasskanal beinhaltet eine zentrische Bohrung 10 durch den Zapfen 6, einen sich anschließenden Topfraum 11, in dem auch der Bypasskolben 9 liegt und setzt sich fort in einen Abflusskanal 12, der wiederum über einen Durchbruch 13 durch das Bypassgehäuse 7 im oberen Arbeitsraum 3 endet.

Quer zur Erstreckung des Abflusskanals 12 liegt ein Flachschieber 14, welcher über einen nicht näher dargestellten Regelmagneten 15 axial verschoben werden kann.

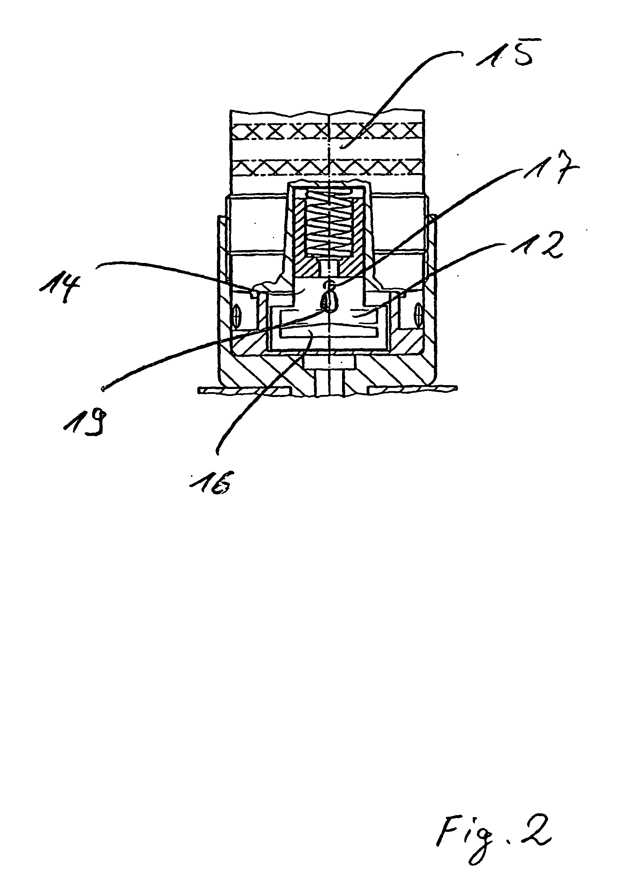

Wie aus Fig. 2 erkennbar ist, ist der Flachschieber 14 mit einem Steuerdurchbruch 16 ausgebildet, durch den der Abflusskanal 12 mehr oder weniger stark verschlossen werden kann.

Ein weiterer Bypasskanal verläuft hydraulisch parallel zum ersten Bypasskanal. Dieser weitere Bypasskanal besteht aus einer oberhalb des Abflusskanals 12 angeordneten, sich in gleicher Richtung erstreckenden Bohrung 17. Der weitere Bypasskanal wird dann durch eine sich an diese Bohrung 17 anschließende Bohrung 18 ergänzt, welche im unteren Bereich des Topfraums 11 ausläuft, wo sie einen direkten Anschluss an die Bohrung 10 hat. Der zweite Bypass ist somit nicht über den Bypasskolben 9 beeinflusst.

Im Bereich der horizontalen Bohrung 17 des zweiten Bypasskanals ist der Flachschieber 14 mit einem langlochförmigen Steuerdurchbruch 19 ausgebildet. Im Ausführungsbeispiel wirken die Steuerdurchbrüche 16, 19 gleich, d.h. beim Anziehen des Regelmagnets 15, wodurch der Flachschieber 14 nach oben verschoben wird, öffnen beide Steuerdurchbrüche 16, 19. Andere Regelsysteme sind jedoch in gleicher Weise denkbar. Beispielsweise kann bei stromlosem Regelmagnet 15, wie er im Ausführungsbeispiel in den Fig. 1 und 2 dargestellt ist, der Steuerdurchbruch 19 in Höhe der Bohrung 17 liegen, sodass der zweite Bypasskanal offen ist und der Abflusskanal 12 kann durch den Flachschieber 14 verschlossen sein, wie dieses dem Ausführungsbeispiel entspricht. Dann würde bei Anziehen des Regelmagnets 15 die Bohrung 17 verschlossen werden und der Steuerdruchbruch 16 würde entsprechend dem Heben des Flachschiebers 14 langsam den Abflusskanal 12 freigeben.

Auch durch eine andere Gestaltung der beiden Bypasskanäle, wobei diese beispielsweise gleiche Querschnitte haben können und nebeneinander liegen, könnte eine andere Regelung erfolgen. Hier könnte dann ein Bypassquerschnitt schnell geöffnet und anschließend wieder verengt werden, während der andere Bypassquerschnitt langsam geöffnet werden könnte, sodass beide Bypassquerschnitte in der Mittelstellung des Flachschiebers 14 einen größten Querschnitt geöffnet hätten.

### Bezugszeichenliste

- 1.: Zylinder
- 2.: Dämpfungskolben
- 3.: Arbeitsraum
- 4.: Arbeitsraum
- 5.: Dämpfungsventil
- 6.: Zapfen
- 7.: Bypassgehäuse
- 8.: Kolbenstange
- 9.: Bypasskolben
- 10.: Bohrung
- 11.: Topfraum
- 12.: Abflusskanal
- 13.: Durchbruch
- 14.: Flachschieber
- 15.: Regelmagnet
- 16.: Steuerdurchbruch
- 17.: Bohrung
- 18.: Bohrung
- 19.: Steuerdurchbruch

## Patentansprüche

1. Hydraulischer Schwingungsdämpfer für Kraftfahrzeuge mit einem, eine Dämpfungsflüssigkeit enthaltenden Zylinder (1) und einer darin axial oszillierend eintauchend angeordneten Kolbenstange (8), an deren unterem Ende ein Dämpfungskolben (2) befestigt ist, der den Zylinderraum in zwei Arbeitsräume (3, 4) unterteilt und mit veränderbaren Durchlässen versehen ist, die durch Dämpfungsventile (5) gesteuert werden und zusätzlich einem, wenigstens zwei voneinander abhängig steuerbare Bypasskanäle aufweisenden, die Arbeitsräume (3, 4) verbindenden Bypass, wobei der Bypass mittels eines einen Steuerdurchbruch (16, 19) aufweisenden Schiebers (14) als Stellelement mehr oder minder verschließbar ist und wobei der Schieber (14) sich über die zwei oder mehreren, bezüglich des Schiebers (14) nebeneinander mündenden Bypasskanäle erstreckt, wobei für jeden Bypasskanal ein separater Steuerdurchbruch (16, 19) im Schieber (14) vorgesehen ist, **dadurch gekennzeichnet, dass** der Schieber (14) als Flachschieber ausgebildet ist und ein Bypasskolben (9) hydraulisch in einem der Bypasskanäle angeordnet ist.

2. Hydraulischer Schwingungsdämpfer nach Anspruch 1, **dadurch gekennzeichnet, dass** der Bypass in einem Bypassgehäuse (7) angeordnet ist, welches den Bypasskolben (9) trägt.

3. Hydraulischer Schwingungsdämpfer nach Anspruch 2, **dadurch gekennzeichnet, dass** der Bypasskanal, in dem der Bypasskolben (9) hydraulisch angeordnet ist, ausgehend von dem kolbenstangenfernen Arbeitsraum (4) eine zentrische Bohrung (10) durch einen Zapfen (6) des Bypassgehäuses (7), einen sich anschließenden, den Bypasskolben (9) aufnehmenden Topfraum (11), einen Abflusskanal (12) und einen Durchbruch (13) zum kolbenstangenseitigen Arbeitsraum (3) beinhaltet.

4. Hydraulischer Schwingungsdämpfer nach den Ansprüchen 1 bis 3, **dadurch gekennzeichnet, dass** die wenigstens zwei Bypasskanäle zeitlich nacheinander geöffnet und/oder verschlossen werden.

5. Hydraulischer Schwingungsdämpfer nach den Ansprüchen 1 bis 4, **dadurch gekennzeichnet, dass** die Querschnitte der wenigstens zwei Bypasskanäle diskontinuierlich zueinander mehr oder minder geöffnet oder verschlossen werden.

6. Hydraulischer Schwingungsdämpfer nach einem oder mehreren der Ansprüche 1 bis 5, **dadurch gekennzeichnet, dass** die Querschnitte der wenigstens zwei Bypasskanäle unterschiedlich groß sind.

## Claims

1. Hydraulic vibration damper for motor vehicles having a cylinder (1) which contains a damping liquid and having a piston rod (8) disposed so as to pass therein in an axially oscillating manner, to the lower end of which piston rod a damping piston (2) is attached which divides the cylinder chamber into two working chambers (3, 4) and is provided with modifiable passageways which are controlled by damping valves (5), and additionally having a bypass which has at least two bypass channels, which can be controlled in dependence upon each other, and which connects the working chambers (3, 4), wherein the bypass can be closed to a greater or lesser degree by means of a slide (14) acting as an adjusting element and comprising a control orifice (16, 19) and wherein the slide (14) extends over the two or more bypass channels which issue next to each other with respect to the slide (14), wherein for each bypass channel a separate control orifice (16, 19) in the slide (14) is provided, **characterised in that** the slide (14) is formed as a flat slide and a bypass piston (9) is disposed hydraulically in one of the bypass channels.

2. Hydraulic vibration damper as claimed in claim 1, **characterised in that** the bypass is disposed in a bypass housing (7) which supports the bypass piston (9).

3. Hydraulic vibration damper as claimed in claim 2, **characterised in that** the bypass channel in which the bypass piston (9) is hydraulically disposed contains, starting from the working chamber (4) remote from the piston rod, a central bore (10) through a spigot (6) of the bypass housing (7), an adjoining pot-shaped chamber (11) receiving the bypass piston (9), a discharge channel (12) and an orifice (13) leading to the piston rod-side working chamber (3).

4. Hydraulic vibration damper as claimed in claims 1 to 3, **characterised in that** the at least two bypass channels are opened and/or closed one after another in time.

5. Hydraulic vibration damper as claimed in claims 1 to 4, **characterised in that** the cross-sections of the at least two bypass channels are opened or closed to a greater or lesser degree in a discontinuous manner with respect to each other.

6. Hydraulic vibration damper as claimed in any one or several of claims 1 to 5, **characterised in that** the cross-sections of the at least two bypass channels are of different sizes.

## Revendications

1. Amortisseur hydraulique pour véhicule automobile, avec un cylindre (1) contenant un fluide d'amortissement et une tige de piston (8) disposée de manière à y plonger de manière axialement oscillante, à l'extrémité inférieure de laquelle est fixé un piston d'amortissement (2), lequel divise la chambre du cylindre en deux chambres de travail (3, 4) et est pourvu de passages modifiables, qui sont pilotés par des soupapes d'amortissement (5), et présente en outre une dérivation reliant les chambres de travail (3, 4), présentant au moins deux canaux de dérivation pouvant être pilotés de manière dépendante l'un de l'autre, la dérivation pouvant être plus ou moins fermée au moyen d'un tiroir (14) présentant une lumière de pilotage (16, 19) en tant qu'organe de réglage, et le tiroir (14) s'étendant devant les deux ou plusieurs canaux de dérivation débouchant côte à côte par rapport au tiroir (14), une lumière de pilotage (16, 19) séparée étant prévue dans le tiroir (14) pour chaque canal de dérivation, **caractérisé en ce que** le tiroir (14) est réalisé sous la forme d'un tiroir plat, et un piston de dérivation (9)est disposé hydrauliquement dans l'un des canaux de dérivation.

2. Amortisseur hydraulique selon la revendication 1, **caractérisé en ce que** la dérivation est agencée dans un boîtier de dérivation (7), lequel porte le piston de dérivation (9).

3. Amortisseur hydraulique selon la revendication 2, **caractérisé en ce que** le canal de dérivation dans lequel est agencé hydrauliquement le piston de dérivation (9), comprend, ressortant de la chambre de travail (4) éloignée de la tige de piston, un alésage central (10) à travers une saillie (6) du boîtier de dérivation (7), une chambre en cuvette (11) s'y raccordant, logeant le piston de dérivation (9), un canal d'évacuation (12) et une lumière (13) vers la chambre de travail (3) du côté de la tige de piston.

4. Amortisseur hydraulique selon les revendications 1 à 3, **caractérisé en ce que** les deux canaux de dérivation au moins présents sont ouverts et/ou fermés successivement.

5. Amortisseur hydraulique selon les revendications 1 à 4, **caractérisé en ce que** les sections des deux canaux de dérivation au moins présents sont plus ou moins ouvertes ou fermées de manière disontinue l'un par rapport à l'autre.

6. Amortisseur hydraulique selon l'une ou plusieurs des revendications 1 à 5, **caractérisé en ce que** les sections des deux canaux de dérivation au moins présents sont de taille différente.
